# EUROPEAN PATENT SPECIFICATION

(11) **EP 3 251 827 B1**
(45) Date of publication and mention of the grant of the patent: **28.07.2021**
(21) Application number: 16171978.6
(22) Date of filing: 30.05.2016
(51) Int. Cl.: B32B 5/02, B32B 27/06, B32B 27/08, B32B 27/12, B32B 27/34, B32B 27/36, B32B 27/40

(54) **COMBINED CARBON- AND GLASS-FIBER REINFORCED THERMOPLASTIC POLYURETHANE AND POLYAMIDE COMPOSITES AND ITS MANUFACTURING**
KOMBINIERTES KOHLENSTOFF- UND GLASFASERVERSTÄRKTE THERMOPLASTISCHE POLYURETHAN- UND POLYAMIDZUSAMMENSETZUNGEN UND DEREN HERSTELLUNG
COMPOSITES COMBINÉS DE POLYURÉTHANE ET DE POLYAMIDE THERMOPLASTIQUES RENFORCÉS PAR DES FIBRES DE CARBONE ET DE VERRE ET LEUR FABRICATION

(43) Date of publication of application: 06.12.2017
(73) Proprietor: Covestro Deutschland AG, 51373 Leverkusen (DE)
(72) Inventor: Stenbeck, Wolfgang, 29699 Bomlitz (DE); Nendel, Sebastian, 09577 Niederwiesa (DE)
(74) Representative: Levpat

(56) References cited:
- WO-A1-2015/173180
- US-A1- 2013 052 897
- US-A1- 2016 101 592
- None

## Description

The present invention is directed to combined carbon- and glass-fiber reinforced thermoplastic polyurethane and polyamide composites, their manufacture and use.

WO-A 2015/173180 discloses a process for the manufacture of a thermoplastic composite laminate comprising at least one layer of thermoplastic film and at least one layer of surface treated fiber material, the resulting thermoplastic composite laminates and the articles made thereof. The thermoplastic composite laminate disclosed in WO-A 2015/173180 exhibit good chemical and mechanical properties. The process for manufacture of such laminate and such composite laminate is relatively expensive due to the thermoplastic resin. US 2016/101592 A1 discloses (see claim 1, [0117]) a composite structure comprising two or more layers of carbon fibre fabric, one or more layer of glass fibre fabric, polyamide thermoplastic films which are laminated to and impregnate the fibrous layers.

There continues to be a need in industry for new thermoplastic composites, which allows cost effective and fast continuous manufacturing and produces material which is suitable for reinforcing structural units e.g. automotive parts. Therefore these thermoplastic composites should exhibit good mechanical properties and a cost effective manufacturing should be possible.

Accordingly, the present invention provides such thermoplastic composite sheet consisting of
A) a thermoplastic laminate of at least one layer of thermoplastic film and one layer of a surface treated carbon fiber material comprising a polymer sizing i), whereby the fiber material are unidirectional fibers, woven cloth, fiber fleece or combinations thereof,
B) at least one polyamide laminate of at least one layer of polyamide film, preferably polyamide-6 film, and at least one layer of a surface treated glass fiber material comprising a polymer sizing ii), whereby the fiber material are unidirectional fibers, woven cloth, fiber fleece or combinations thereof,
C) a thermoplastic laminate of at least one layer of thermoplastic film and one layer of a surface treated carbon fiber material comprising a polymer sizing i), whereby the fiber material are unidirectional fibers, woven cloth, fiber fleece or combinations thereof.

The composite sheets can be manufactured with the well-known process for lamination. The laminates A), B) and C) are pressed at a temperature above the melting or softening point of the thermoplastic films of A) and C) and of the polyamide film B), preferably at a temperature of 250 °C to 300 °C, more preferably at a temperature of 270 to 290 °C and at a pressure of 15 to 30 bar, preferably of 18 to 25 bar, more preferably of 20 bar.

The resulting composite sheets can be used to make parts by thermoforming in short molding cycles and are recyclable. These parts possess good chemical resistance, mechanical properties and are paintable or printable without priming or other surface preparations.

Equivalent weights and molecular weights given herein in Daltons (Da) are number average equivalent weights and number average molecular weights respectively, unless indicated otherwise. The laminates A), B) and C) are now described more detailed.

The thermoplastic laminates A) and C) can be equal or different; preferably the laminates A) and C) are equal.

The thermoplastic laminate A) comprises at least one layer of thermoplastic film and one layer of a surface treated carbon fiber material comprising a polymer sizing i), whereby the fiber material are unidirected fibers, woven cloth, fiber fleece or combinations thereof.

The thermoplastic film can be obtained by extrusion of a thermoplastic resin by either blown film or flat-die process. A silane coupling agent is optionally added in the thermoplastic film.

The polymer sizing i) is applied on the carbon fibers to achieve a better adhesion of the fibers to the matrix material. The sizing serves as adhesion promotor between fiber and matrix. To this end, however, the sizing must be matched to the corresponding matrix system. Fibers with an epoxy sizing (silane) are of limited use in thermoplastics. With thermoplastic polyurethane matrix materials, it is advisable to use fibers with coatings of polyurethane resins (for example Toho Tenax™ 24k HTS-fiber F13).

Other film-forming materials for sizings may be starch derivatives, polymers and copolymers of vinyl acetate and acrylic esters, epoxy resin emulsions, polyesters, polypropylene, polybutylene terephthalate and polyamides in which may contain silanes as adhesion promoters.

At least one layer of thermoplastic film and at least one layer of the surfaced treated carbon fiber material are laminated into the thermoplastic laminate A) under temperatures above the melting or softening point of the thermoplastic film and under pressure that is applied by nipping rolls or nipping belts. A continuous roll-to-roll lamination process realized in the above described way can produce thermoplastic laminates A) using rolls of fiber material and thermoplastic film materials.

Thermoplastic films suitable for use in the present invention as a substrate for the thermoplastic laminate A) include thermoplastic polyurethane (TPU) is used as thermoplastic laminate material.

The thermoplastic films preferably will have a high enough melt flowability, above 200°C, for the inventive composite lamination process. Preferably, the melt flow index of the extruded film tested at 210°C / 300°C and under 3.8 kg / 8,7 kg according to ASTM D-1238 is above 2g/10 min., more preferably between 5 g/10 min. and 60 g/10 min. and most preferably from 20 g/10 min. and 40 g/10 min.

The films also are preferably amorphous or with very low crystallinity, and preferably have a glass transition temperature lower than 170°C, more preferably from 70 to 160°C determined by differential scanning calorimetry (DSC) according to DIN EN ISO 11357-2 at a heating rate of 10 K / min / 20 K / min with the definition of Tg midpoint temperature (tangent method) according to DIN 51005 and nitrogen determined as protective gas.

Thermoplastic polyurethane elastomers are well known to those skilled in the art. They are of commercial importance due to their combination of high-grade mechanical properties with the known advantages of cost-effective thermoplastic processability. A wide range of variation in their mechanical properties can be achieved by the use of different chemical synthesis components. A review of thermoplastic polyurethanes, their properties and applications is given in Kunststoffe [Plastics] 68 (1978), pages 819 to 825, and in Kautschuk, Gummi, Kunststoffe [Natural and Vulcanized Rubber and Plastics] 35 (1982), pages 568 to 584.

Thermoplastic polyurethanes are synthesized from linear polyols, mainly polyester diols or polyether diols, organic diisocyanates and short chain diols (chain extenders). Catalysts may be added to the reaction to speed up the reaction of the components.

The relative amounts of the components may be varied over a wide range of molar ratios in order to adjust the properties. Molar ratios of polyols to chain extenders from 1:1 to 1:12 have been reported. These result in products with hardness values ranging from 80 Shore A to 85 Shore D (determined by DIN EN ISO 868 and DIN ISO 7619-1).

Thermoplastic polyurethanes can be produced either in stages (prepolymer method) or by the simultaneous reaction of all the components in one step (one shot). In the former, a prepolymer formed from the polyol and diisocyanate is first formed and then reacted with the chain extender. Thermoplastic polyurethanes may be produced continuously or batch-wise. The best-known industrial production processes are the so-called belt process and the extruder process.

Examples of the suitable polyols include difunctional polyether polyols, polyester polyols, and polycarbonate polyols. Small amounts of trifunctional polyols may be used, yet care must be taken to make certain that the thermoplasticity of the thermoplastic polyurethane remains substantially un-effected.

Suitable polyester polyols include the ones which are prepared by polymerizing ε-caprolactone using an initiator such as ethylene glycol, ethanolamine and the like. Further suitable examples are those prepared by esterification of polycarboxylic acids. The polycarboxylic acids may be aliphatic, cycloaliphatic, aromatic and/or heterocyclic and they may be substituted, e.g., by halogen atoms, and/or unsaturated. The following are mentioned as examples: succinic acid; adipic acid; suberic acid; azelaic acid; sebacic acid; phthalic acid; isophthalic acid; trimellitic acid; phthalic acid anhydride; tetrahydrophthalic acid anhydride; hexahydrophthalic acid anhydride; tetrachlorophthalic acid anhydride, endomethylene tetrahydrophthalic acid anhydride; glutaric acid anhydride; maleic acid; maleic acid anhydride; fumaric acid; dimeric and trimeric fatty acids such as oleic acid, which may be mixed with monomeric fatty acids; dimethyl terephthalates and bis-glycol terephthalate. Suitable polyhydric alcohols include, e.g., ethylene glycol; propylene glycol-(1,2) and -(1,3); butylene glycol-(1,4) and -(1,3); hexanediol-(1,6); octanediol-(1,8); neopentyl glycol; (1,4-bis-hydroxy-methylcyclohexane); 2-methyl-1,3-propanediol; 2,2,4-tri-methyl-1,3-pentanediol; triethylene glycol; tetraethylene glycol; polyethylene glycol; dipropylene glycol; polypropylene glycol; dibutylene glycol and polybutylene glycol, glycerine and trimethlyolpropane.

Suitable polyisocyanates for producing the thermoplastic polyurethanes useful in the present invention may be, for example, organic aliphatic and/or aromatic diisocyanates including, for example, 1,4-tetramethylene diisocyanate, 1,6-hexamethylene diisocyanate, 2,2,4-trimethyl-1,6-hexamethylene diisocyanate, 1,12-dodecamethylene diisocyanate, cyclohexane-1,3- and -1,4-diisocyanate, 1-isocyanato-2-isocyanatomethyl cyclopentane, 1-isocyanato-3-isocyanatomethyl-3,5,5-trimethyl-cyclohexane (isophorone diisocyanate or IPDI), bis-(4-isocyanatocyclohexyl)-methane, 2,4'-dicyclohexylmethane diisocyanate, 1,3- and 1,4-bis-(isocyanatomethyl)-cyclohexane, bis-(4-isocyanato-3-methylcyclohexyl)-methane, α,α,α',α'-tetramethyl-1,3- and/or -1,4-xylylene diisocyanate, 1-isocyanato-1-methyl-4(3)-isocyanatomethyl cyclohexane, 2,4- and/or 2,6-hexahydrotoluylene diisocyanate, 1,4-phenylendiisocyanate, 2,4 and/or 2,6 toluydendiisocyanate (TDI), 1,5-naphtylenediisocyanate, 2,2'and/or 2,4'diphenylmethanediisocyanate (MDI), or mixtures of the aforementioned diisocyanates, derivatives of these monomeric polyisocyanates having urethane, isocyanurate, allophanate, biuret, uretdione or iminooxadiazinedione groups, and mixtures thereof.

Preferred chain extenders with molecular weights of 62 to 500 include aliphatic diols containing 2 to 14 carbon atoms, such as ethanediol, 1,6-hexanediol, diethylene glycol, dipropylene glycol, and 1,4-butanediol in particular, for example. However, diesters of terephthalic acid with glycols containing 2 to 4 carbon atoms are also suitable, such as terephthalic acid-bis-ethylene glycol or - 1,4-butanediol for example, or hydroxyalkyl ethers of hydroquinone, such as 1,4-di-(β-hydroxyethyl)-hydroquinone for example, or (cyclo)aliphatic diamines, such as isophorone diamine, 1,2- and 1,3-propylenediamine, N-methyl-propylenediamine-1,3 or N,N'-dimethylethylenediamine, for example, and aromatic diamines, such as toluene 2,4- and 2,6-diamines, 3,5-diethyltoluene 2,4- and/or 2,6-diamine, and primary ortho-, di-, tri- and/or tetraalkyl-substituted 4,4'-diaminodiphenylmethanes, for example. Mixtures of the aforementioned chain extenders may also be used. Optionally, triol chain extenders having a molecular weight of 62 to 500 may also be used. Moreover, customary monofunctional compounds may also be used in small amounts, e.g., as chain terminators or demolding agents. Alcohols such as octanol and stearyl alcohol or amines such as butylamine and stearylamine may be cited as examples.

To prepare the thermoplastic polyurethanes, the synthesis components may be reacted, optionally in the presence of catalysts, auxiliary agents and/or additives, in amounts such that the equivalent ratio of NCO groups to the sum of the groups which react with NCO, particularly the OH groups of the low molecular weight diols/triols and polyols, is 0.9:1.0 to 1.2:1.0, preferably 0.95:1.0 to 1.10:1.0.

Suitable catalysts include tertiary amines which are known in the art, such as triethylamine, dimethyl-cyclohexylamine, N-methylmorpholine, N,N'-dimethyl-piperazine, 2-(dimethyl-aminoethoxy)-ethanol, diazabicyclo-(2,2,2)-octane and the like, for example, as well as organic metal compounds in particular, such as titanic acid esters, iron compounds, tin compounds, e.g., tin diacetate, tin dioctoate, tin dilaurate or the dialkyltin salts of aliphatic carboxylic acids such as dibutyltin diacetate, dibutyltin dilaurate or the like. The preferred catalysts are organic metal compounds, particularly titanic acid esters and iron and/or tin compounds.

In addition to difunctional chain extenders, small quantities of up to about 5 mol. %, based on moles of the bifunctional chain extender used, of trifunctional or more than trifunctional chain extenders may also be used.

Trifunctional or more than trifunctional chain extenders of the type in question are, for example, glycerol, trimethylolpropane, hexanetriol, pentaerythritol and triethanolamine.

Suitable thermoplastic polyurethanes are available in commerce, for instance, from Covestro Deutschland AG, Germany, under the TEXLN® or Desmopan® trademark, from BASF SE, Germany, under the ELASTOLLAN® trademark and from Lubrizol Corporation under the trade names of ESTANE®, ISOPLAST® and PELLETHANE®.

In one embodiment of the invention the thermoplastic polyurethane has soft segments in its backbone structure and has a hardness between 50 to 80 Shore D.

In another embodiment of the invention the thermoplastic polyurethane has no soft segments in its backbone structure and has a hardness above 80 Shore D.

Many different carbon fibers or strands and combinations may be utilized in the thermoplastic laminate A), including but not limited to carbon such as SGL Group The Carbon Company, Wiesbaden, Germany, Zoltech Corporation, St. Louis USA, Toho Tenax Europe GmbH, Wuppertal, Germany, or carbon fleece from companies such as carboNXT GmbH, Wischhafen, Germany. The fibers amount to 20% to 60%, more preferably 35% to 60%, and most preferably 45% to 55% by volume of the composite.

Unidirectional fibers in the sense of the invention are those which e.g. allow for their being spread in sizes of e.g. 12k, 24k, 50k (k=1000) to 150 to 400 mm width, preferably to 170 to 350 mm width most preferably to 190 to 300 mm width and which are available under the trade names of PANEX® 35 from Zoltech, SIGRAFIL® C from SGL Group or Tenax® from Toho Tenax.

At least one layer of thermoplastic film and at least one layer of the surfaced treated fiber material are laminated into the thermoplastic laminate A). In one embodiment of the invention, the fiber material is woven cloth, unidirectional fibers or fiber tape or fiber fleece. In another embodiment of the invention, the fiber material is unidirectional fibers or woven fiber or fiber fleece. In an embodiment of the invention, several fiber materials may be combined, e.g. in different layers on top of one another. Particular attention should be laid to the process of creating a unidirectional layer and the slight spreading of the single fibers as described in published patent application DE102009056189 A1 "Vorrichtung und Verfahren zum Erzeugen einer UD-Lage", DE102009056197 A1 "Verfahren und Vorrichtung zum Erzeugen einer UD-Lage" and DE102009043280 A1 "Halbzeug and Halbzeugverbund" by Karl Mayer Malimo Textilmaschinenfabrik, Chemnitz, Germany, and the selection of the sizing.

The fiber can be advantageously surfaced treated with a polymer based sizing to enhance the staying of the single fiber in the polymer matrix. The polymer sizing works as an adhesion enhancer between fiber and matrix material. To this end, the nature of the polymer sizing has to be adapted to the respective fiber and/or matrix material. Fibers with an epoxy comprising polymer sizing (silan sizing) find only limited application in thermoplastic matrix material. An adhesion enhancing polymer sizing can greatly contribute to better fiber/matrix adhesion and interaction. When thermoplastic polyurethane matrix raw materials are used, it is recommended to use polymer sizings made of polyurethane resins such as e.g. Toho Tenax® 24k HTS-fiber F13. Other film forming polymer sizing may be starch derivatives, polymer and copolymers of vinyl acetate and acrylic esters, emulsions of epoxy resins, saturated and unsaturated polyesters, polypropylene, polybutylene terephthalate, polyamides, PVA, phenolic resins melamine resins and their respective mixtures, that additionally may comprise silanes as adhesion enhancer.

In one preferred embodiment of the invention the laminate A) comprises two layers of thermoplastic (TPU) film and one layer of surface treated carbon fiber material whereby the surface treated carbon fiber material is located between the two outer layers of TPU film.

The thermoplastic laminate A) can have a thickness of ≥ 100 µm to ≤ 300 µm, preferably of ≥ 150 µm to ≤ 250 µm, and more preferably of ≥ 190 µm to ≤ 210 µm.

The description above for the thermoplastic laminate A) can apply also to the description of the laminate C). Thermoplastic laminate A) and C) may be different, preferably laminate C) is equal to laminate A).

The thickness of laminate C) can be of ≥ 100 µm to ≤ 300 µm, preferably of ≥ 150 µm to ≤ 250 µm, and more preferably of ≥ 190 µm to ≤ 210 µm. Preferably laminate A) and C) exhibit the same thickness, more preferably laminate A) and C) are equal and each exhibit a thickness of ≥ 100 µm to ≤ 300 µm, preferably of ≥ 150 µm to ≤ 250 µm, and more preferably of ≥ 190 µm to ≤ 210 µm.

In one preferred embodiment of the invention the thermoplastic laminate A) and C) each comprising two layers of thermoplastic film and one layer of a surface treated carbon fiber material, whereby the surface treated carbon fiber material is located between the two outer layers of thermoplastic film.

The polyamide laminate B) comprises at least on layer of polyamide film, preferably polyamide-6 film, and at least one layer of a surface treated glass fiber material comprising a polymer sizing ii), whereby the fiber material are unidirectional fibers of woven cloth, fiber fleece or combinations therof.

The polyamide film, preferably the polyamide-6 film is commercially available (e.g. mf-films made of B33L from BASF SE). Polyamide films are usually prepared by the cast film extrusion process, which is well known in the state of the art.

The polyamide films preferably have a relative viscosity according to ISO 307 of 2.10 to 4.50, preferably 2.85 to 4.0, 1% [m/v] in 96 % [m/m] sulfuric acid, melting point according to ISO 3146 of 180 to 300 °C, preferably 200 to 270 °C, the density according to ISO 1183 of 0.75 to 2.15 g/cm³, preferably 0.9 to 1.76 g/cm³.

Many different glass fibers or strands and combinations may be utilized in polyamide laminate B) of the present invention, including but not limited to glass from companies such as 3B the fiber glass company, Hoeilaart, Belgium, PPG Industries Ohio, Inc. USA, and Johnson M Fiberglass, Inc., The fibers amount to 20 % to 60 %, more preferably 35 % to 60 %, and most preferably 45 % to 55 % by volume of the polyamide laminate.

At least one layer of polyamide film, preferably polyamide-6 film and at least one layer of the surfaced treated glass fiber material are laminated into a laminate. In one embodiment of the invention, the glass fiber material is woven cloth, unidirectional fibers or fiber tape or fiber fleece. In another embodiment of the invention, the glass fiber material is unidirectional fibers or woven fiber or fiber fleece. In an embodiment of the invention, several glass fiber materials may be combined, e.g. in different layers on top of one another. Particular attention should be laid to the process of creating a unidirectional layer and the slight spreading of the single fibers as described in published patent application DE102009056189 A1 "Vorrichtung und Verfahren zum Erzeugen einer UD-Lage", DE102009056197 A1 "Verfahren und Vorrichtung zum Erzeugen einer UD-Lage" and DE102009043280 A1 "Halbzeug and Halbzeugverbund" by Karl Mayer Malimo Textilmaschinenfabrik, Chemnitz, Germany, and the selection of the sizing.

The glass fiber can be advantageously surfaced treated with a polymer based sizing to enhance the staying of the single fiber in the polymer matrix. The polymer sizing works as an adhesion enhancer between fiber and matrix material. To this end, the nature of the polymer sizing has to be adapted to the respective fiber and/or matrix material. An adhesion enhancing polymer sizing can greatly contribute to better fiber/matrix adhesion and interaction. For the polyamide matrix raw materials, it is recommended to use polymer sizings made of polyamide resins. Other film forming polymer sizing may be starch derivatives, polymer and copolymers of vinyl acetate and acrylic esters, emulsions of epoxy resins, saturated and unsaturated polyesters, polypropylene, polybutylene terephthalate, polyamides, PVA, phenolic resins melamine resins and their respective mixtures.

In one embodiment of the invention at least one laminate B) comprises two layers of a polyamide film, preferably a polyamide-6 film and one layer of surface treated glass fiber material whereby the surface treated glass fiber material is located between the two outer layers of polyamide film, preferably a polyamide-6 film.

In order to obtain a certain thickness of the polyamide laminate B), multiple layers of laminate B) each comprising two layers of a polyamide film, preferably a polyamide-6 film, and one layer of surface treated glass fiber material whereby the surface treated glass fiber material is located between the two outer layers of polyamide film, preferably a polyamide-6 film can be laminated together.

In one embodiment of the invention at least three, preferably at least six, more preferably at least eight laminates B) each comprising two layers of a polyamide film, preferably a polyamide-6 film, and one layer of surface treated glass fiber material whereby the surface treated glass fiber material is located between two outer layers of polyamide film, preferably a polyamide-6 film are forming the laminate B).

The inventive composite sheet can be obtained by pressing laminates A), B), and C) at a temperature above the melting or softening point of the thermoplastic film and of the polyamide film, preferably at a temperature of of 250°C to 300 °C, more preferably at a temperature of 270 to 290°C, and at a pressure of 15 to 30 bar, preferably 18 to 25 bar, more preferably 20 bar.

In one embodiment of the invention the composite sheet consists of two outer layers of laminate A) and C) and laminate B) forms the inner layer of the composite sheet.

In another embodiment of the invention the composite sheet consists of two outer layers of laminate A) and C) wherein laminate A) and C) each comprising two layers of thermoplastic polyurethane film and one layer of surface treated carbon fiber material, whereby the surface treated carbon fiber material is located between the outer layers A) and C), and of at least three layers, preferably at least six layers, more preferably at least eight layers of laminate B) wherein each laminate B) comprising two layers of polyamide film, preferably a polyamide-6 film, and one layer of surface treated glass fiber material whereby the surface treated glass fiber material is located between two outer layers of polyamide film, preferably a polyamide-6 film.

The thickness of the outer layers of laminate A) and C) can vary between of ≥ 100 µm to ≤ 300 µm, preferably of ≥ 150 µm to ≤ 250 µm, and more preferably of ≥ 190 µm to ≤ 210 µm.

In one preferred embodiment the laminates A) and C) are equal and have the same thickness which can lie in the range of ≥ 100 µm to ≤ 300 µm, preferably of ≥ 150 µm to ≤ 250 µm, and more preferably of ≥ 190 µm to ≤ 210 µm.

The invention further describes a process for the manufacture of a composite sheet wherein,
I) the thermoplastic laminate A) and C) is prepared by a roll-to-roll continuous manufacturing process comprising
   a) extruding a thermoplastic resin into a film article;
   b) surface treating a carbon fiber material with a polymer sizing i); and laminating at least one layer of thermoplastic film and one layer of the surfaced treated carbon fiber material at a temperature above the melting or softening point of the thermoplastic film, preferably at a temperature of 180 °C to 230 °C, preferably 185 °C to 210 °C more preferably 190 °C to 200 °C and under pressure applied by nipping rolls or nipping belts, whereby the carbon fiber material are unidirectional fibers, woven cloth, fiber fleece or combinations thereof, and
II) the polyamide laminate B) is prepared by
   c) extruding a polyamide resin, preferably a polyamide-6 resin into a film article;
   d) surface treating glass fiber material with a polymer sizing ii), preferably a polyamide sizing and
   laminating at least one layer of polyamide film and at least one layer of surfaced treated glass fiber material at a temperature of above the melting or softening point of the polyamide film, preferably a temperature of 220 °C to 300 °C, more preferably of 250 °C to 270 °C and under pressure by nipping rolls or nipping belts, whereby the fiber material are unidirectional fibers, woven cloth, fiber fleece or combinations thereof
III) the laminates of step I) and II) are pressed into a composite sheet at a temperature above the melting or softening point of the thermoplastic film and of the polyamide film, preferably of 250°C to 300 °C, more preferably at a temperature of 270 to 290°C and at a pressure of 15 to 30 bar, preferably 18 to 25 bar, more preferably 20 bar,
characterized in that the composite sheet consists of at least one, preferably at least three, more preferably at least six, most preferred at least eight laminates B) which are located between the outer layers of laminate A) and C).

With regard to the composition of the laminates A), B) and C), reference is made to the aforementioned described laminates.

The resulting reinforced composite sheet is then cut, preferably by water-jets and can then be further processed. In an embodiment of the invention, a composite sheet is formed by pressing at a temperature of 250 °C to 300 °C, preferably 270 °C to 290 °C and a pressure of 15 to 30 bar, preferably 18 to 25 bar, more preferably 20 bar. The inventive composite sheets exhibit excellent surface properties as well as excellent mechanical properties such as tensile stress at break und tensile strain at break. Furthermore the inventive composite sheets are much cheaper with regard to manufacturing and material costs by having the same or even better mechanical properties than the composite sheets of the prior art.

The inventive composite sheets can be advantageously applied as structural reinforcement material in e.g. the automotive, bicycle, boat or air- or space craft sector such as roofs, bumpers, pillars, or as housing parts in the respective interior applications such as housings, seats, or as housings for portable or non-portable machines such as chain saws, borers or drillers, screw drivers etc.

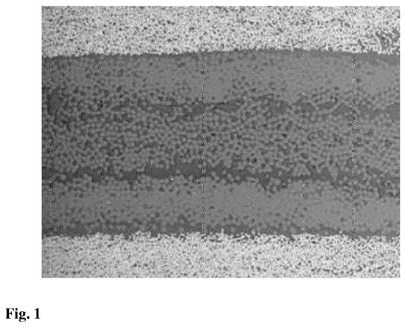

FIG. 1 shows a microscopic cross-sectional image (along the UD-fiber material (0°)) of the inventive composite sheet of one layer of laminate A) comprising two outer layers of thermoplastic film and one layer of surface treated carbon-fiber material in the middle of 0.1 mm thickness of three layers of laminate B) comprising two outer layers of polyamide-6 film and one layer of surface treated glass- fiber material in the middle of 1.8 mm thickness and of one layer laminate C) comprising two outer layers of thermoplastic film and one layer of surface treated carbon-fiber material in the middle of 0.1 mm thickness (same as laminate A).

### Examples

### Laminate A-1):

TPU-film, a Dureflex® X2311 aromatic thermoplastic polyurethane film with a shore D value of 83, and unidirectional (UD)-carbon fibers (Tenax® 24k HTS40-fiber F13 from Toho Tenax Europe GmbH) were laminated in an own built thermo bonding machine by Cetex Institute wherein the fibers were arranged to a laminate with uniform thickness and width between 150 mm and 250 mm. The lamination was used to fix the fibers, it was not intended to fully impregnate the fibers by the TPU film matrix. After laminating the resulting laminate A-1) was wound on a roll for further processing. In the resulting laminate A-1) the surface treated carbon fiber material is embedded between two outer TPU film layers and the thickness of this laminate A-1) was 200 µm. The fiber material content was about 50 vol.-%.

### Laminate B-1):

Polyamide-6 film (mf-Folie made of B33L from BASF SE) and UD-glass fibers (TufRov 4588 from PPG Ind.) were laminated in an own built thermo bonding machine by Cetex Institute wherein the fibers were arranged to a laminate with uniform thickness and width between 150 mm and 250 mm. The lamination was used to fix the fibers, it was not intended to fully impregnate the fibers by the polyamide film matrix. After laminating the resulting laminate B-1) was wound on a roll for further processing. In the resulting laminate B-1) the surface treated glass fiber material is embedded between two outer polyamide-6 film layers. The fiber material content was about 50 vol.-%.

### Laminate B-2):

Polyamide-6 film (PA6-film made of B33L from BASF SE from mf-folien GmbH) and UD-carbon fibers (Tenax® 24k HTS40-fiber F13 from Toho Tenax Europe GmbH) were laminated in an own built thermo bonding machine by Cetex Institute wherein the fibers were arranged to a laminate with uniform thickness and width between 150 mm and 250 mm. The lamination was used to fix the fibers, it was not intended to fully impregnate the fibers by the polyamide film matrix. After laminating the resulting laminate B-2) was wound on a roll for further processing. In the resulting laminate B-2) the surface treated carbon fiber material is embedded between two outer polyamide-6 film layers. The fiber material content was about 50 vol.-%.

### Preparation of the composite sheets

For the production of impregnated composite sheets, a rectangular tool made of steel enclosed on all sides with a defined height was used to be fitted with the UD-laminates. The tool was closed with a steel plate. In a press manufactured by the company Dr. Collin Type P300 P/M the heating of the UD laminate, as well as the pressing of the single layers was performed. After cooling, the fully impregnated composite sheet was removed. A thermoforming to a geometric part can be done later. The parameters for the cyclic press flow is given in table 1.

The following composite sheets have been prepared as described above:
Example 1: composite sheet made by embedding six layers of laminate B-1) with one layer of laminate A-1) on each side (CF-TPU/GF-PA6/CF-TPU).
Example 2 (comparative): composite sheet made of 8 layers of laminate A-1) (CF-TPU)
Example 3 (comparative): composite sheet made of 8 layers of laminate B-1) (GF-PA6)
Example 4 (comparative): composite sheet made of 8 layers of laminate B-2) (CF-PA6)

**Table 1: Parameters for the cyclic press flow for a sheet of 289 cm²**

| **Step** | **1** | **2** | **3** | **4** |
|---|---|---|---|---|
| Time / sec | 1 | 260 | 180 | 480 |
| T top / °C | 140 | 280¹⁾ | 280¹⁾ | 70 |
| T bottom / °C | 140 | 280¹⁾ | 280¹⁾ | 70 |
| Temperature Raise / K / min | 0 | 30 | 0 | 30 |
| Machine Pressure / bar | 0 | 35 | 47 | 47 |
| Tool Pressure / N/cm² | 0 | 149 | 200 | 200 |
| Presssure Raise / bar / sec | 0 | 0 | 0 | 0 |

| | | | | |
|---|---|---|---|---|
| ¹⁾for Example 2 (CF-TPU) the maximum temperature was only 210 °C | | | | |

The sheets can then be water-jet cut and cut straps can be formed as well as samples for tensile stress, compression stress, impact resistance or bending tests. The samples are examined in a degree of 0° with respect to the UD fibers. Furthermore, the sheets can be thermoformed or highpressure formed.

Following properties were determined for the resulting composite sheets p and listed in Table 2:

| | Example 1 CF-TPU+GF-PA6+CF-TPU | Example 2 (comparative) CF-TPU | Example 3 (comparative) GF-PA6 | Example 4 (comparative) CF-PA6 |
|---|---|---|---|---|
| Tensile strength / MPa | 1.530 | 1.470 | 815 | 1.090 |
| Flexural modulus of elasticity / GPa | 116 | 126 | 45 | 109 |
| Bending strength/ MPa | 1.226 | 1.230 | 1.013 | 1.030 |

| | | | | |
|---|---|---|---|---|
| Table 2: Properties of the composite sheets | | | | |

A Zwick Z100 material testing machine with a macro displacement transducer was used to determine the bending strength according to DIN EN ISO 14125, the flexural modulus of elasticity and the tensile strength were determined according to DIN EN ISO 527-4/5.

Surprisingly the flexural modulus of elasticity in direction of the fibers (0°) of inventive example 1 is only 8 % lower compared to example 2, but tensile strength is about 4 % higher and bending strength of example 1 is nearly equal to example 2.

Instead of a composite sheet, the individual UD laminates can be formed also in a geometric three-dimensional structure to a structural component.

In the inventive composite sheets following effects were observed:
- very good impregnation behavior of glass fibers and carbon fibers to the TPU matrix and Polyamide matrix
- almost every single filament with TPU matrix and polyamide matrix enclosed (see also the microscopic cross-sectional images of the composite laminates, Fig. 1)
- good processing behavior
- very suitable for the production of composites.

Surprisingly, it turned out that very good optical surfaces can be produced with the TPU film in the outer layer of the inventive composite sheet and the surface of the tool is very well mapped. Matrix resin buildup on the tool is very easy to remove without expensive mechanical cleaning. The use of mold release agents is not required.

The inventive fiber composite sheets made by the instant process may preferably be used to make parts by thermoforming in short molding cycles and they are recyclable. These parts possess good chemical resistance, mechanical properties and are paintable or printable without priming or other surface preparations.

## Claims

1. A composite sheet consisting of
A) a thermoplastic laminate of at least one layer of thermoplastic film and one layer of a surface treated carbon fiber material comprising a polymer sizing i), whereby the fiber material are unidirectional fibers, woven cloth, fiber fleece or combinations thereof,
B) at least one polyamide laminate of at least one layer of polyamide film, preferably polyamide-6 film, and at least one layer of a surface treated glass fiber material comprising a polymer sizing ii), preferably polyamide-sizing, whereby the fiber material are unidirectional fibers, woven cloth, fiber fleece or combinations thereof,
C) a thermoplastic laminate of at least one layer of thermoplastic film and one layer of a surface treated carbon fiber material comprising a polymer sizing i), whereby the fiber material are unidirectional fibers, woven cloth, fiber fleece or combinations thereof,
wherein the thermoplastic film of laminate A) and/or C) is a thermoplastic polyurethane.

2. A composite sheet according to Claim 1, wherein the laminates A), B) and C) are laminated pressed at a temperature above the melting or softening point of the thermoplastic film and of the polyamide film, preferably at a temperature of 250°C to 300 °C, more preferably at a temperature of 270 to 290°C, and at a pressure of 15 to 30 bar, preferably 18 to 25 bar, more preferably 20 bar.

3. A composite according to Claim 1 or 2, wherein the thermoplastic laminate A) and C) are different.

4. A composite according to Claim 1 or 2, wherein the thermoplastic laminate A) and C) are equal.

5. A composite sheet according to any of Claims 1 to 4, wherein the thermoplastic laminate A) and C) each comprising two layers of thermoplastic film and one layer of a surface treated carbon fiber material, whereby the surface treated carbon fiber material is located between the two outer layers of thermoplastic film.

6. A composite sheet according to any of Claims 1 to 5, wherein the at least one polyamide laminate
B) comprises two layers of polyamide film, preferably polyamide-6 film and one layer of a surface treated glass fiber material, whereby the surface treated glass fiber material is located between the two outer layers of polyamide film.

7. A composite sheet according to any of Claims 1 to 4, wherein the polyurethane has soft segments in its backbone structure and hardness between 50-80 Shore D.

8. A composite sheet according to any of Claims 1 to 4, wherein the polyurethane has no soft segments in its backbone structure and has a hardness above 80 Shore D.

9. A composite sheet according to any of Claims 1 to 8, wherein at least three layers of laminate B) comprising two layers of polyamide film, preferably polyamide-6 film and one layer of a surface treated glass fiber material, whereby the surface treated glass fiber material is located between the two outer layers of polyamide film are present.

10. A composite sheet according to any of Claims 1 to 9, wherein at least six layers of laminate B) comprising two layers of polyamide film, preferably polyamide-6 film and one layer of a surface treated glass fiber material, whereby the surface treated glass fiber material is located between the two outer layers of polyamide film are present.

11. A process for the manufacture of a composite sheet, wherein
I) the thermoplastic laminate A) and C) is prepared by a roll-to-roll continuous manufacturing process comprising
a) extruding a thermoplastic polyurethane into a film article;
b) surface treating a carbon fiber material with a polymer sizing i); and
laminating at least one layer of thermoplastic film and one layer of the surfaced treated carbon fiber material at a temperature above the melting or softening point of the thermoplastic film and under pressure applied by nipping rolls or nipping belts, whereby the carbon fiber material are unidirectional fibers, woven cloth, fiber fleece or combinations thereof, and
II) the polyamide laminate B) is prepared by
c) extruding a polyamide resin, preferably a polyamide-6-resin into a film article;
d) surface treating glass fiber material with a polymer sizing ii), preferably a polyamide sizing and
laminating at least one layer of polyamide film and at least one layer of surfaced treated glass fiber material at a temperature of above the melting or softening point of the polyamide film and under pressure applied by nipping rolls or nipping belts, whereby the fiber material are unidirectional fibers, woven cloth, fiber fleece or combinations thereof
III) the laminates of step I) and II) are pressed into a composite sheet at a temperature a temperature above the melting or softening point of the thermoplastic film and of the polyamide film, preferably of 250°C to 300 °C, more preferably at a temperature of 270 to 290°C and under pressure of 15 to 30 bar, preferably 18 to 25 bar, more preferably 20 bar, **characterized in that** the composite sheet consists of at least one, preferably at least three, more preferably at least six, most preferred at least eight laminates B), which are located between the outer layers of laminate A) and C).

12. Article made of a composite sheet according to any of Claims 1 to 10.

13. Use of an article according to claim 12 as structural reinforcement part in automotive, bicycle, boat or air- or space craft sector as housing parts for machines.

## Patentansprüche

1. Verbundlage, bestehend aus
A) einem thermoplastischen Laminat aus mindestens einer Schicht aus thermoplastischem Film und einer Schicht eines oberflächenbehandelten Kohlefasermaterials, das eine Polymerschlichte i) umfasst, wobei das Fasermaterial unidirektionale Fasern, Webtuch, Faservlies oder Kombinationen davon ist,
B) mindestens einem Polyamidlaminat aus mindestens einer Schicht aus Polyamidfilm, vorzugsweise Polyamid-6-Film, und mindestens einer Schicht eines oberflächenbehandelten Glasfasermaterials, das eine Polymerschlichte ii) umfasst, vorzugsweise Polyamid-Schlichte, wobei das Fasermaterial unidirektionale Fasern, Webtuch, Faservlies oder Kombinationen davon ist,
C) einem thermoplastischen Laminat aus mindestens einer Schicht aus thermoplastischem Film und einer Schicht eines oberflächenbehandelten Kohlefasermaterials, das eine Polymerschlichte i) umfasst, wobei das Fasermaterial unidirektionale Fasern, Webtuch, Faservlies oder Kombinationen davon ist, wobei der thermoplastische Film aus Laminat A) und/oder C) ein thermoplastisches Polyurethan ist.

2. Verbundlage nach Anspruch 1, wobei die Laminate A), B) und C) bei einer Temperatur oberhalb des Schmelz- oder Erweichungspunkts des thermoplastischen Films und des Polyamidfilms laminierend gepresst werden, vorzugsweise bei einer Temperatur von 250 °C bis 300 °C, bevorzugter einer Temperatur von 270 bis 290 °C, und bei einem Druck von 15 bis 30 bar, vorzugsweise 18 bis 25 bar, bevorzugter 20 bar.

3. Verbund nach Anspruch 1 oder 2, wobei die thermoplastischen Laminate A) und C) verschieden sind.

4. Verbund nach Anspruch 1 oder 2, wobei die thermoplastischen Laminate A) und C) gleich sind.

5. Verbundlage nach einem der Ansprüche 1 bis 4, wobei die thermoplastischen Laminate A) und C) jeweils zwei Schichten aus thermoplastischem Film und eine Schicht aus oberflächenbehandeltem Kohlefasermaterial umfassen, wobei das oberflächenbehandelte Kohlefasermaterial sich zwischen den beiden Außenschichten aus thermoplastischem Film befindet.

6. Verbundlage nach einem der Ansprüche 1 bis 5, wobei das mindestens eine Polyamidlaminat B) zwei Schichten aus Polyamidfilm, vorzugsweise Polyamid-6-Film, und eine Schicht aus oberflächenbehandeltem Glasfasermaterial umfasst, wobei das oberflächenbehandelte Glasfasermaterial sich zwischen den beiden Außenschichten der Polyamidfilm befindet.

7. Verbundlage nach einem der Ansprüche 1 bis 4, wobei das Polyurethan weiche Segmente in seiner Grundgerüststruktur und eine Härte zwischen 50 und 80 Shore D aufweist.

8. Verbundlage nach einem der Ansprüche 1 bis 4, wobei das Polyurethan keine weichen Segmente in seiner Grundgerüststruktur aufweist und eine Härte von mehr als 80 Shore D aufweist.

9. Verbundlage nach einem der Ansprüche 1 bis 8, wobei mindestens drei Schichten aus Laminat B), die zwei Schichten aus Polyamidfilm, vorzugsweise Polyamid-6-Film, und eine Schicht aus oberflächenbehandeltem Glasfasermaterial umfassen, wobei das oberflächenbehandelte Glasfasermaterial sich zwischen den beiden Außenschichten der Polyamidfilm befindet, vorhanden sind.

10. Verbundlage nach einem der Ansprüche 1 bis 9, wobei mindestens sechs Schichten aus Laminat B), die zwei Schichten aus Polyamidfilm, vorzugsweise Polyamid-6-Film, und eine Schicht aus oberflächenbehandeltem Glasfasermaterial umfassen, wobei das oberflächenbehandelte Glasfasermaterial sich zwischen den beiden Außenschichten des Polyamidfilms befindet, vorhanden sind.

11. Verfahren zur Fertigung einer Verbundlage, wobei
I) die thermoplastischen Laminate A) und C) durch ein kontinuierliches Rolle-zu-Rolle-Fertigungsverfahren hergestellt werden, umfassend:
a) Extrudieren eines thermoplastischen Polyurethans zu einem Filmartikel;
b) Oberflächenbehandeln eines Kohlefasermaterials mit einer Polymerschlichte i); und Laminieren von mindestens einer Schicht aus thermoplastischem Film und einer Schicht des oberflächenbehandelten Kohlefasermaterials bei einer Temperatur oberhalb des Schmelz- oder Erweichungspunkts des thermoplastischen Films und unter Druck, der durch Quetschrollen oder Quetschbänder ausgeübt wird, wobei das Kohlefasermaterial unidirektionale Fasern, Webtuch, Faservlies oder Kombinationen davon ist, und
II) das Polyamidlaminat B) hergestellt wird durch
c) Extrudieren eines Polyamidharzes, vorzugsweise eines Polyamid-6-Harzes, zu einem Filmartikel;
d) Oberflächenbehandeln von Glasfasermaterial mit einer Polymerschlichte ii), vorzugsweise einer Polyamidschlichte, und
Laminieren von mindestens einer Schicht aus Polyamidfilm und mindestens einer Schicht des oberflächenbehandelten Glasfasermaterials bei einer Temperatur oberhalb des Schmelz- oder Erweichungspunkts des Polyamidfilms und unter Druck, der durch Quetschrollen oder Quetschbänder ausgeübt wird, wobei das Fasermaterial unidirektionale Fasern, Webtuch, Faservlies oder Kombinationen davon ist,
III) die Laminate von Schritt I) und II) bei einer Temperatur oberhalb des Schmelz- oder Erweichungspunkts des thermoplastischen Films und des Polyamidfilms zu einer Verbundlage gepresst werden, vorzugsweise bei einer Temperatur von 250 °C bis 300 °C, bevorzugter einer Temperatur von 270 bis 290 °C, und bei einem Druck von 15 bis 30 bar, vorzugsweise 18 bis 25 bar, bevorzugter 20 bar,
**dadurch gekennzeichnet, dass** die Verbundlage aus mindestens einem, vorzugsweise mindestens drei, bevorzugter mindestens sechs, am meisten bevorzugt mindestens acht Laminaten B) besteht, die sich zwischen den Außenschichten der Laminate A) und C) befinden.

12. Artikel, der aus einer Verbundlage gemäß den Ansprüchen 1 bis 10 gefertigt ist.

13. Verwendung eines Artikels nach Anspruch 12 als strukturelles Verstärkungsteil auf dem Sektor der Automobile, Fahrräder, Boote oder Luft- oder Raumfahrt als Gehäuseteile für Maschinen.

## Revendications

1. Feuille composite constituée
A) d'un stratifié thermoplastique d'au moins une couche de film thermoplastique et d'une couche d'un matériau de fibres de carbone traité en surface comprenant un encollage de polymère i), le matériau fibreux étant des fibres unidirectionnelles, un tissu tissé, une nappe de fibres ou des combinaisons correspondantes,
B) d'au moins un stratifié de polyamide d'au moins une couche de film de polyamide, préférablement de film de polyamide-6, et d'au moins une couche d'un matériau de fibres de verre traité en surface comprenant un calibrage de polymère ii), préférablement un encollage de polyamide, le matériau fibreux étant des fibres unidirectionnelles, un tissu tissé, une nappe de fibres ou des combinaisons correspondantes,
C) d'un stratifié thermoplastique d'au moins une couche de film thermoplastique et d'une couche d'un matériau de fibres de carbone traité en surface comprenant un encollage de polymère i), le matériau fibreux étant des fibres unidirectionnelles, un tissu tissé, une nappe de fibres ou des combinaisons correspondantes,
le film thermoplastique du stratifié A) et/ou C) étant un polyuréthane thermoplastique.

2. Feuille composite selon la revendication 1, les stratifiés A), B) et C) étant stratifiés pressés à une température supérieure au point de fusion ou de ramollissement du film thermoplastique et du film de polyamide, préférablement à une température de 250 °C à 300 °C, plus préférablement à une température de 270 à 290 °C, et à une pression de 15 à 30 bars, préférablement 18 à 25 bars, plus préférablement 20 bars.

3. Composite selon la revendication 1 ou 2, les stratifiés thermoplastiques A) et C) étant différents.

4. Composite selon la revendication 1 ou 2, les stratifiés thermoplastiques A) et C) étant égaux.

5. Feuille composite selon l'une quelconque des revendications 1 à 4, les stratifiés thermoplastiques A) et C) comprenant chacun deux couches de film thermoplastique et une couche d'un matériau de fibres de carbone traité en surface, le matériau de fibres de carbone traité en surface étant situé entre les deux couches externes de film thermoplastique.

6. Feuille composite selon l'une quelconque des revendications 1 à 5, l'au moins un stratifié de polyamide B) comprenant deux couches de film de polyamide, préférablement de film de polyamide-6 et une couche d'un matériau de fibres de verre traité en surface, le matériau de fibres de carbone traité en surface étant situé entre les deux couches externes de film de polyamide.

7. Feuille composite selon l'une quelconque des revendications 1 à 4, le polyuréthane possédant des segments souples dans sa structure de squelette et une dureté comprise entre 50 et 80 Shore D.

8. Feuille composite selon l'une quelconque des revendications 1 à 4, le polyuréthane ne possédant pas de segments souples dans sa structure de squelette et possédant une dureté supérieure 80 Shore D.

9. Feuille composite selon l'une quelconque des revendications 1 à 8, au moins trois couches de stratifié B), comprenant deux couches de film de polyamide, préférablement de film de polyamide-6 et une couche d'un matériau de fibres de verre traité en surface, le matériau de fibres de verre traité en surface étant situé entre les deux couches externes de film de polyamide, étant présentes.

10. Feuille composite selon l'une quelconque des revendications 1 à 9, au moins six couches de stratifié B), comprenant deux couches de film de polyamide, préférablement de film de polyamide-6 et une couche d'un matériau de fibres de verre traité en surface, le matériau de fibres de verre traité en surface étant situé entre les deux couches externes de film de polyamide, étant présentes.

11. Procédé pour la fabrication d'une feuille composite,
I) les stratifiés thermoplastiques A) et C) étant préparés par un procédé de fabrication en continu rouleau à rouleau comprenant
a) l'extrusion d'un polyuréthane thermoplastique en un article de type film ;
b) le traitement en surface d'un matériau de fibres de carbone avec un encollage de polymère i) ; et
la stratification d'au moins une couche de film thermoplastique et d'une couche du matériau de fibres de carbone traité en surface à une température supérieure au point de fusion ou de ramollissement du film thermoplastique et sous une pression appliquée par des rouleaux de pincement ou des courroies de pincement, le matériau de fibres de carbone étant des fibres unidirectionnelles, un tissu tissé, une nappe de fibres ou des combinaisons correspondantes, et
II) le stratifié de polyamide B) étant préparé par
c) extrusion d'une résine de polyamide, préférablement d'une résine de polyamide-6 en un article de type film ;
d) le traitement en surface d'un matériau de fibres de verre avec un encollage de polymère ii), préférablement un encollage de polyamide et
la stratification d'au moins une couche de film de polyamide et d'au moins une couche du matériau de fibres de verre traité en surface à une température supérieure au point de fusion ou de ramollissement du film de polyamide et sous une pression appliquée par des rouleaux de pincement ou des courroies de pincement, le matériau fibreux étant des fibres unidirectionnelles, un tissu tissé, une nappe de fibres ou des combinaisons correspondantes
III) les stratifiés de l'étape I) et II) étant pressés en une feuille composite à une température supérieure au point de fusion ou de ramollissement du film thermoplastique et du film de polyamide, préférablement de 250 °C à 300 °C, plus préférablement à une température de 270 à 290 °C, et sous une pression de 15 à 30 bars, préférablement 18 à 25 bars, plus préférablement 20 bars,
**caractérisé en ce que** la feuille composite est constituée d'au moins un, préférablement d'au moins trois, plus préférablement d'au moins six, de la manière la plus préférée d'au moins huit stratifié(s) B), qui sont situés entre les couches externes des stratifiés A) et C).

12. Article composé d'une feuille composite selon l'une quelconque des revendications 1 à 10.

13. Utilisation d'un article selon la revendication 12 en tant que pièce de renforcement structural dans le secteur automobile, le secteur des bicyclettes, le secteur naval, le secteur aérien et le secteur spatial en tant que pièces de boîtier pour machines.
